# EUROPEAN PATENT APPLICATION

(11) **EP 2 131 143 A2**
(43) Date of publication of application: **09.12.2009**
(21) Application number: 09160707.7
(22) Date of filing: 20.05.2009
(51) Int. Cl.: G01B 11/02, G01B 9/04

(54) **Optical measuring instrument**

(30) Priority: 04.06.2008 JP 2008146488
(71) Applicant: Mitutoyo Corporation, Kawasaki-shi, Kanagawa 213-8533 (JP)
(72) Inventor: Arai, Masanori, Kawasaki-shi Kanagawa 213-8533 (JP); Cho, Gyokubu, Kawasaki-shi Kanagawa 213-8533 (JP); Nagahama, Tatsuya, Kawasaki-shi Kanagawa 213-8533 (JP)
(74) Representative: Grünecker, Kinkeldey, Stockmair & Schwanhäusser Anwaltssozietät

(57) **Abstract**

An optical measuring instrument (1) captures an image of an object to be measured mounted on a table (40) by moving an objective lens (61) relative to the table (40) and measures a dimension of the object based on the captured image of the object. The optical measuring instrument (1) includes a reflective photoelectric sensor (62) provided around the objective lens (61) for detecting the approach of the object to the objective lens, and a collision avoidance unit (3) for avoiding collision of the objective lens (61) with the object when the reflective photoelectric sensor (62) detects the approach of the objective lens (61) to the object.

## Description

### BACKGROUND OF THE INVENTION

### 1. FIELD OF THE INVENTION

The present invention relates to an optical measuring instrument, and particularly to an optical measuring instrument including a sensor for collision avoidance.

### 2. DESCRIPTION OF RELATED ART

In an optical measuring instrument such as an image measuring instrument and a microscope (hereinafter simply referred to as a measuring instrument), an objective lens needs to automatically or manually approach extremely close to an object to be measured for measuring the object. At this time, in the measuring instrument, the objective lens may approach the object too closely because of program errors or operational errors, so that the objective lens may collide with the object. In order to solve such a problem, a measuring instrument including a sensor for detecting the approach of an objective lens to an object to be measured has been suggested. When the sensor detects that the objective lens comes in proximity to the object, the movement of the objective lens is stopped so as to prevent collision of the objective lens with the object (for instance, Document 1: JP-A-2003-65748 and Document 2: JP-A-2002-39739).

Specifically, the measuring instrument as disclosed in Document 1 is provided with the sensor including: an antenna extending downwardly below the position of the objective lens; and a strain gauge of which a resistance value is changed by elastic deformation of the antenna. In the measuring instrument as disclosed in Document 1, when the objective lens approaches the object to be measured, the antenna comes into contact with the object and thus the resistance value of the strain gauge is changed, thereby detecting that the objective lens comes in proximity to the object. Then, the movement of the objective lens is stopped so as to prevent the objective lens from colliding with the object.

On the other hand, a measuring instrument as disclosed in Document 2 includes a coil serving as an electromagnetic-induction sensor. In the measuring instrument as disclosed in Document 2, when an objective lens approaches a conductive object to be measured, an inductance of the coil is changed, thereby detecting that the objective lens comes in proximity to the object. Then, the movement of the objective lens is stopped so as to prevent the objective lens from colliding with the object.

However, in the measuring instrument as disclosed in Document 1, when the sensor detects that the objective lens comes in proximity to the object, the antenna is brought into contact with the object, which may damage a soft object. Further, when the antenna is considerably deformed by colliding with the object, the antenna may remain deformed even after the antenna is moved away from the object, which adversely affects stability of detecting capability of the sensor.

In the measuring instrument as disclosed in Document 2, since a working distance of the objective lens, which is a distance between the objective lens and the object, is 0.2 mm or less, the electromagnetic-induction sensor (coil) having an extremely short detection range is used. Thus, in the measuring instrument as disclosed in Document 2, an objective lens having a working distance of approximately 2 to 10 mm cannot be used because of the sensor having such a short detection range.

### SUMMARY OF THE INVENTION

An object of the invention is to provide an optical measuring instrument capable of preventing a soft object to be measured from being damaged, stabilizing detecting capability of a sensor, and adopting an objective lens having a long working distance.

According to an aspect of the invention, an optical measuring instrument for capturing an image of an object to be measured mounted on a table by moving an objective lens relative to the table and for measuring a dimension of the object based on the captured image of the object, the optical measuring instrument includes: a reflective photoelectric sensor provided around the objective lens for detecting an approach of the object to the objective lens; and a collision avoidance unit that avoids collision of the objective lens with the object when the approach of the object is detected by the reflective photoelectric sensor.

When the reflective photoelectric sensor detects the approach of the object to the objective lens, for instance, the warning is notified to a user, the movement of the objective lens is slowed down, the movement of the objective lens is stopped, or the objective lens is moved away from the object. Thus, collision of the objective lens with the object can be avoided.

Since the optical measuring instrument includes the sensor (reflective photoelectric sensor) for detecting the approach of the object to the objective lens, the collision of the objective lens with the object can be avoided by the collision avoidance unit when the sensor detects that the objective lens is in proximity to the object.

Also, since the reflective photoelectric sensor that can detect the approach of the object without contacting the object is used, a soft object can be detected without any damages. The sensor is also not damaged because of detection, thereby stabilizing detecting capability.

Further, since the reflective photoelectric sensor has a long detection range as compared with that of an electromagnetic-induction sensor of a coil, the invention is applicable to an optical measuring instrument including an objective lens having a long working distance.

Because the sensor is provided around the objective lens, the objective lens can be easily replaced.

According to the aspect of the invention, the reflective photoelectric sensor preferably includes a plurality of sensors having different detection ranges of mutually different lengths from the objective lens. The collision avoidance unit preferably notifies a warning to a user or deaccelerates the objective lens when the approach of the object to the objective lens is detected by one of the sensors of the reflective photoelectric sensor, the one of the sensors having a long detection range. Also, the collision avoidance unit preferably stops a movement of the objective lens or moves the objective lens away from the object when the approach of the object to the objective lens is detected by another one of the sensors of the reflective photoelectric sensor, the another one of the sensors having a short detection range.

According to this arrangement, the optical measuring instrument includes the plurality of sensors having different detection ranges. When the approach of the object to the objective lens is detected by the one of the sensors which has the long detection range, the warning is notified to the user or the movement of the objective lens is slowed down. When the approach of the object to the objective lens is detected by the another one of the sensors which has the short detection range, the movement of the objective lens is stopped or the objective lens is moved away from the object. Thus, collision of the objective lens with the object can be reliably avoided in a stepwise manner.

### BRIEF DESCRIPTION OF THE DRAWINGS

Fig. 1 is an overall view showing an image measuring instrument according to a first exemplary embodiment of the invention.
Fig. 2 is a side view showing an objective lens and a sensor.
Fig. 3 is an overall view showing an image measuring instrument according to a second exemplary embodiment of the invention.
Fig. 4 is a perspective view showing a sensor according to the exemplary embodiment.
Fig. 5 is a side view showing a sensor according to a third exemplary embodiment of the invention.

### DETAILED DESCRIPTION OF PREFERRED EMBODIMENT(S)

### First Exemplary Embodiment

A first exemplary embodiment of the invention will be described below with reference to the attached drawings.

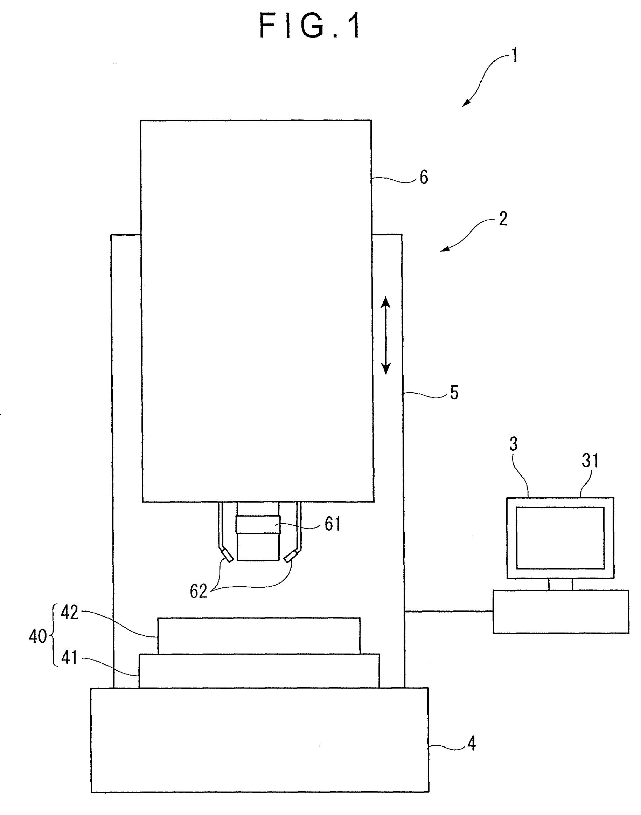

Fig. 1 is an overall view showing an image measuring instrument 1 as an optical measuring instrument according to the first exemplary embodiment of the invention.

The image measuring instrument 1 includes: a body 2 for capturing an image of an object to be measured; and a PC (personal computer) 3 for controlling the body 2 and displaying the image captured by the body 2 on a display 31.
The body 2 includes: a base 4 provided with a table 40 on which the object is mounted; a column 5 extending upwardly from a rear portion of the base 4; and a slider 6 that is movable in the up-and-down direction along the column 5 for capturing an image of the object.

The table 40 includes: a first table 41 that is movable along the base 4 in the direction perpendicular to the paper surface of Fig. 1 (y direction); and a second table 42 that is movable along the first table 41 in the right-and-left direction (x direction orthogonal to the y direction) of Fig. 1.

The slider 6 is movable in the up-and-down direction (z direction orthogonal to the x and y directions) relative to the table 40 that is movable in the x and y directions. In other words, the slider 6 is relatively movable in a three-dimensional direction relative to the object mounted on the table 40. The slider 6 serves as a driver that moves a later-described objective lens 61 close to and away from the object. The slider 6 includes: an illuminator (not shown); the objective lens 61 that casts to the object illumination light irradiated from the illuminator while condensing light reflected by the object; a CCD (charge coupled device) camera (not shown) that serves as an image pickup for forming an image of the object by light condensed by the objective lens 61 while capturing the formed image of the object; and a sensor 62 that detects the approach of the objective lens 61 to the object.

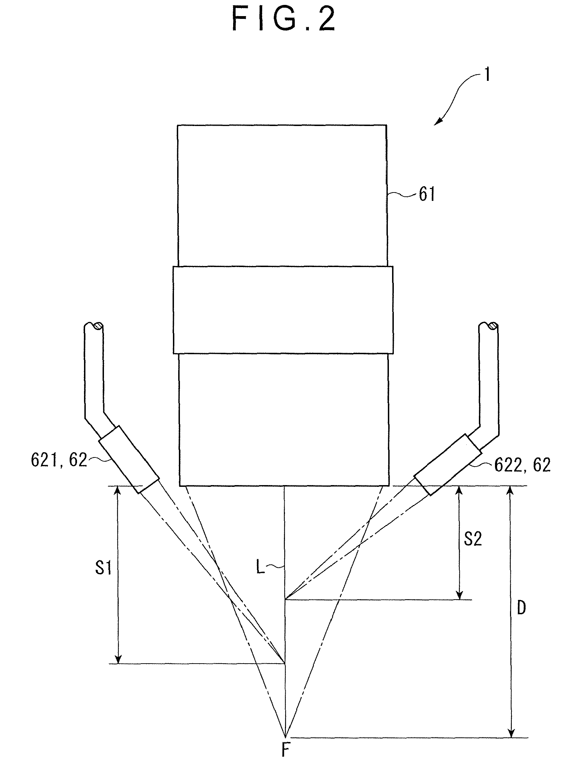

Fig. 2 is a side view showing the objective lens 61 and the sensor 62.

The objective lens 61 has an optical axis L. The objective lens 61 also has a working distance D which is a distance between a lower end surface of the objective lens 61 and a focal point F. The working distance D is 10 mm according to the exemplary embodiment.

The sensor 62 includes a pair of sensors 621 and 622 provided around the objective lens 61. The pair of sensors 621 and 622 interpose the objective lens 61 therebetween. These sensors 621 and 622 are reflective photoelectric sensors (optical fiber sensors) that can detect the object without contacting the object. The sensors 621 and 622 include an irradiator, a light receiver, and a circuit. The irradiator includes an LED (light emitting diode) that is a light source, and a flexible optical fiber that changes a direction of light irradiated from the LED to irradiate the object. The light receiver receives light irradiated from the irradiator and reflected by the object, and outputs to the circuit a signal corresponding to a received-light intensity. The circuit detects the object based on the signal outputted from the light receiver. In other words, the circuit outputs to the PC 3 a signal indicating the proximity of the object when the object enters into detection ranges of the sensors 621 and 622. On the contrary, when the object moves away from the detection ranges, the circuit outputs to the PC 3 a signal indicating the departure of the object.

The sensors 621 and 622 respectively have the same detection ranges in the axial direction of the sensors 621 and 622. These sensors 621 and 622 are disposed so that lower end surfaces of the sensors 621 and 622 are located at the same height position as the lower end surface of the objective lens 61. Also, the sensors 621 and 622 are disposed at mutually different angles relative to the optical axis L of the objective lens 61. Accordingly, ends of detection ranges S1 and S2 extending along the direction of the optical axis L are positioned between the objective lens 61 and the focal point F of the objective lens 61. The ends of the detection ranges S1 and S2 are also located at mutually different height positions. Incidentally, the sensors 621 and 622 are disposed so that the end of the detection range S2 of the sensor 622 is closer to the objective lens 61 than the end of the detection range S1 of the sensor 621 is. In addition, the sensors 621 and 622 are disposed so that the ends of the detection ranges S1 and S2 are positioned in the vicinity of the optical axis L of the objective lens 61.

As described above, the PC 3 (see Fig. 1) controls the table 40 and the slider 6 and displays an image captured by the slider 6 on the display 31. For measuring the object, the PC 3 is operated by a user to move the table 40 so that the object is placed directly under the objective lens 61. Subsequently, the PC 3 is operated automatically by a program therein or manually by the user to move the objective lens 61 (slider 6) downwardly so as to approach the object.

In a case where the PC 3 moves the objective lens 61 too far down because of program errors or operational errors, PC 3 initially decreases a descending speed of the objective lens 61 when the distance between the objective lens 61 and the object becomes S1 and thus the object is detected by the sensor 621. Then, the PC 3 stops the descent of the objective lens 61 when the distance between the objective lens 61 and the object becomes S2 and thus the object is detected by the sensor 622.

Incidentally, when the object is detected by the sensor 622 because the distance between the objective lens 61 and the object becomes S2, the PC 3 may move the objective lens 61 upwardly for automatically focusing thereafter. A collision avoidance unit of the invention includes the PC 3 according to this exemplary embodiment.

The following advantages can be attained according to the exemplary embodiment.

In a case where the PC 3 moves the objective lens 61 down toward the object, the PC 3 stops the descent of the objective 61 when the sensor 622 detects that the objective lens 61 comes in proximity to the object. Thus, the objective lens 61 can be prevented from colliding with the object.

The image measuring instrument 1 includes the pair of sensors 621 and 622 having the detection ranges S1 and S2 of mutually different lengths from the objective lens 61. Thus, in the image measuring instrument 1, the PC 3 initially decreases the descending speed of the objective lens 61 when the object is detected by the sensor 621 having the longer detection range. Then, the PC 3 stops the descent of the objective lens 61 when the object is detected by the sensor 622 having the shorter detection range. In other words, collision with the object can be avoided in a stepwise manner, so that the collision can be reliably avoided.

Because the object is detected by the reflective photoelectric sensors 621 and 622 without contacting the object, a soft object can be detected without any damages. The sensors 621 and 622 are also not damaged because of detection, thereby stabilizing detecting capacities of the sensors 621 and 622.

Because the reflective photoelectric sensors 621 and 622 have the long detection distances, the sensors 621 and 622 can be used even when the objective lens 61 has a long working distance. In addition, because the optical fiber sensors 621 and 622 that are separate from the light source are used as reflective photoelectric sensors, commercially-available and extremely small sensors can be used, which allows cost reduction and space saving.

Because the sensors 621 and 622 are provided around the objective lens 61, the objective lens 61 can be easily replaced.

### Second Exemplary Embodiment

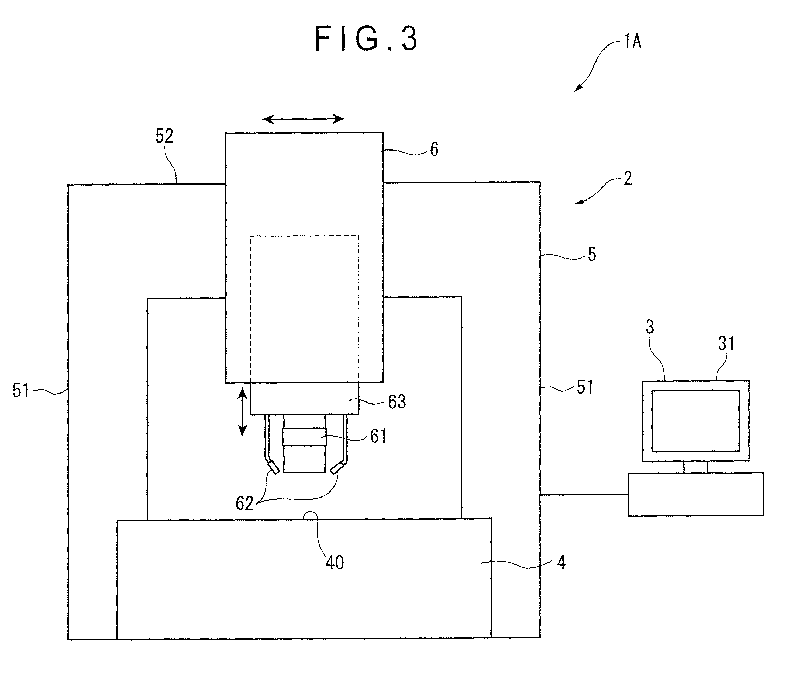

Fig. 3 is an overall view showing an image measuring instrument 1A according to a second exemplary embodiment of the invention.

It should be noted that components which are identical or correspond to those of the first exemplary embodiment will be denoted by the same reference numerals, description of which will be omitted or simplified.

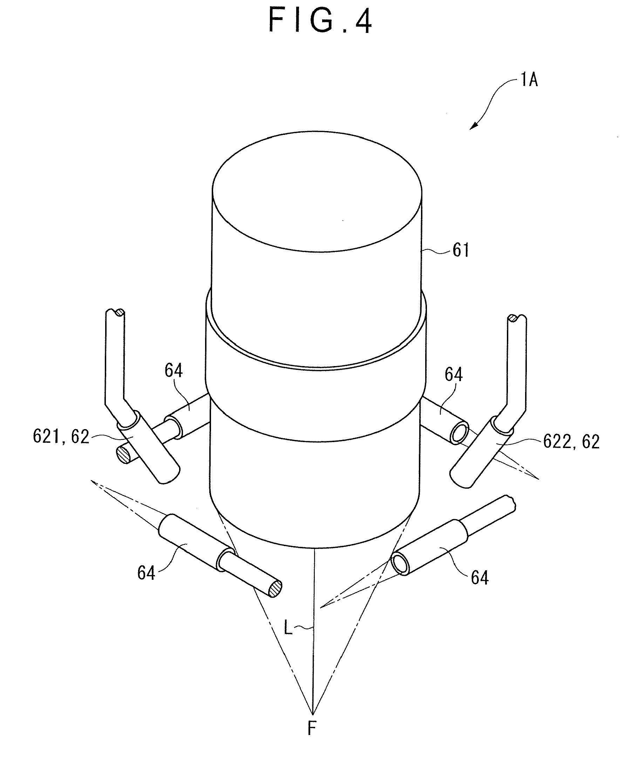

The image measuring instrument 1A of this exemplary embodiment has an arrangement similar to that of the first exemplary embodiment. However, an objective lens 61 is movable in the up-and-down direction and right-and-left direction according to the second exemplary embodiment while the objective lens 61 is movable only in the up-and-down direction according to the first exemplary embodiment. In addition, a sensor 64 (see Fig. 4) is provided around the objective lens 61 to detect the lateral approach of the object to the objective lens 61 according to the second exemplary embodiment, which is different from the first exemplary embodiment.

A body 2 of the image measuring instrument 1A includes: a base 4 including a table 40 on which an object to be measured is mounted, the table 40 being provided on an upper surface of the base 4; a portal column 5 provided on a rear portion of the base 4 and including a pair of cylinders 51 and a beam 52 bridging between the cylinders 51; and a slider 6 that is slidably movable along the beam 52 in the right-and-left direction of Fig. 3. The slider 6 includes: a Z-axis spindle 63 that is movable in the up-and-down direction within the slider 6; the objective lens 61 provided on a lower end of the Z-axis spindle 63; and sensors 62 and 64 (see Fig. 4 for the sensor 64).

Fig. 4 is a perspective view showing the sensors 62 and 64.

Similarly to the first exemplary embodiment, the sensor 62 includes reflective photoelectric sensors 621 and 622, between which the objective lens 61 is interposed, around the objective lens 61. These sensors 621 and 622 are disposed at mutually different angles relative to the optical axis L of the objective lens 61 similarly to the first exemplary embodiment. Accordingly, the ends of the detection ranges S1 and S2 (not shown) extending along the optical axis L of the objective lens 61 are located at mutually different positions.

The sensor 64 is a reflective photoelectric sensor. The sensor 64 includes four sensors provided at equal intervals around the objective lens 61 to be orthogonal to the optical axis L. The detection ranges of the four sensors shown by dashed-dotted lines in Fig. 4 can cover the vicinity of the objective lens 61 and the sensors 621 and 622.

For measuring the object, the PC 3 is operated by a user to move the slider 6 in the right-and-left direction so that a surface to be measured of an object is placed directly under the objective lens 61 according to the second exemplary embodiment. At this time, for instance, the object has an L-shape to include a horizontal portion having the surface to be measured and a projecting portion projecting upwardly from the horizontal portion. Thus, the sensor 64 detects the approach of the projecting portion when the projecting portion of the object comes close to the objective lens 61 from the lateral side, and then the PC 3 stops the movement of the slider 6.

Incidentally, when the sensor 64 detects that the object approaches the objective lens 61 from the lateral side, the PC 3 may move the slider 6 to keep the objective lens 61 away from the object.

After the PC 3 moves the slider 6 so that the surface to be measured of the object is positioned directly under the objective lens 61, the PC 3 moves the objective lens 61 (Z-axis spindle 63) downwardly to approach the object. Similarly to the first exemplary embodiment, when the distance between the objective lens 61 and the object initially becomes S1 and thus the object is detected by the sensor 621, the PC 3 decreases the descending speed of the objective lens 61. Then, when the distance between the objective lens 61 and the object becomes S2 and thus the object is detected by the sensor 622, the PC 3 stops the descent of the objective lens 61. Thus, collision with the object is avoided in a stepwise manner.

In the second exemplary embodiment, the same advantages can be attained as the first exemplary embodiment because of the arrangement similar to the first exemplary embodiment. In addition, because the sensor 64 for detecting the lateral approach of the object to the objective lens 61 is provided around the objective lens 61, the approach of the object can be detected by the sensor 64 if the objective lens 61 comes in proximity to the object while the objective lens 61 is moved in the right-and-left direction. Thus, collision of the objective lens 61 with the object can be avoided by stopping the movement of the objective lens 61 or the like.

### Third Exemplary Embodiment

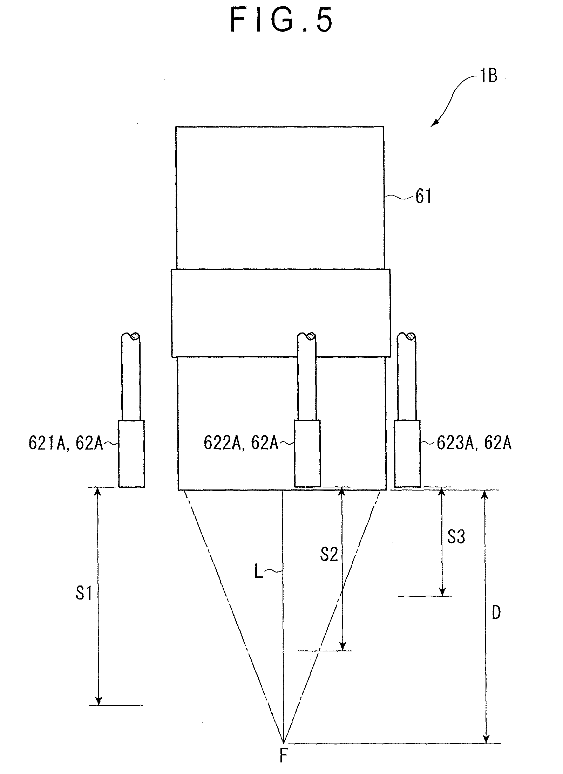

Fig. 5 is a side view showing a sensor 62A of an image measuring instrument 1B according to a third exemplary embodiment of the invention.

The image measuring instrument 1B of the third exemplary embodiment has an arrangement similar to the first exemplary embodiment. However, the reflective photoelectric sensor 62A includes three sensors in this exemplary embodiment while the reflective photoelectric sensor 62 includes two sensors in the first exemplary embodiment. Accordingly, collision of an objective lens 61 with an object to be measured can be avoided by a PC 3 in a further stepwise manner.

The sensor 62A includes three sensors 621A, 622A and 623A around the objective lens 61 along the optical axis L of the objective lens 61. The lengths of detection ranges of these sensors 621A, 622A and 623A are mutually different. The sensors 621A, 622A and 623A are provided so that positions of the ends of detection ranges S1, S2 and S3 are gradually remote from the objective lens 61 in this order.

In a case where the PC 3 moves the objective lens 61 too far down because of program errors or operational errors, the PC 3 initially beeps or displays warning on a display 31 so as to notify the warning to a user when the distance between the objective lens 61 and the object becomes S1 and thus the object is detected by the sensor 62A. Subsequently, the PC 3 decreases the descending speed of the objective lens 61 when the distance between the objective lens 61 and the object becomes S2. Then, the PC 3 stops the descent of the objective lens 61 when the distance between the objective lens 61 and the object becomes S3. Incidentally, when the distance between the objective lens 61 and the object becomes S3, the PC 3 may move the objective lens 61 upwardly for automatically focusing thereafter.

In the third exemplary embodiment, the same advantages can be attained as the first exemplary embodiment because of the arrangement similar to the first exemplary embodiment. In addition, since the three sensors 621A, 622A and 623A are used, collision with the object can be avoided in a further stepwise manner, thereby avoiding the collision further reliably.

### Modification of Exemplary Embodiment(s)

The invention is not limited to the exemplary embodiments as described above but includes modifications and improvements as long as an object of the invention can be achieved.

The sensors 62, 62A and 64 respectively include two to four sensors for detecting the approach of the object to the objective lens 61 according to the exemplary embodiments as described above. However, the sensors 62, 62A and 64 may respectively include only one or five or more sensors.

In the above exemplary embodiments, the reflective-type image measuring instrument is exemplified in which light is irradiated to the object from the objective lens 61 provided above the object and the objective lens 61 condenses the light reflected by the object for observation of the object. However, the invention is also applicable to a transmissive-type image measuring instrument in which light is irradiated to the object from a light source provided below the objective lens 61 and the objective lens 61 condenses the light transmitted through the object for observation of the object.

The invention is also applicable to other optical measuring instruments such as a microscope having an objective lens.

## Claims

1. An optical measuring instrument (1, 1A, 1B) for capturing an image of an object to be measured mounted on a table (40) by moving an objective lens (61) relative to the table (40) and for measuring a dimension of the object based on the captured image of the object, the optical measuring instrument comprising:
a reflective photoelectric sensor (62, 62A, 64) provided around the objective lens (61) for detecting an approach of the object to the objective lens (61); and
a collision avoidance unit (3) that avoids collision of the objective lens (61) with the object when the approach of the object is detected by the reflective photoelectric sensor (62, 62A, 64).

2. The optical measuring instrument according to claim 1, wherein
the reflective photoelectric sensor (62, 62A, 64) includes a plurality of sensors having detection ranges of mutually different lengths from the objective lens (61), and
the collision avoidance unit (3) notifies a warning to a user or deaccelerates the objective lens (61) when the approach of the object to the objective lens (61) is detected by one of the sensors of the reflective photoelectric sensor (62, 62A, 64), the one of the sensors having a long detection range, and stops a movement of the objective lens (61) or moves the objective lens (61) away from the object when the approach of the object to the objective lens (61) is detected by another one of the sensors of the reflective photoelectric sensor (62, 62A, 64), the another one of the sensors having a short detection range.
